# EUROPEAN PATENT APPLICATION

(11) **EP 4 749 505 A1**
(43) Date of publication of application: **27.05.2026**
(21) Application number: 25217395.0
(22) Date of filing: 20.11.2025
(51) Int. Cl.: G06F 30/15, G06F 30/17, G06F 30/20

(54) **CONSTRAINTS ENGINE AND ASSOCIATED METHODS FOR DESIGN TOOL**

(30) Priority: 20.11.2024 US 202418953415
(71) Applicant: RTX Corporation, Farmington, CT 06032 (US)
(72) Inventor: HALL, Carolyn Ann, Middletown (US); RUOTI, Christopher A, Eagle Mountain (US); CARRICO, Jeff M, Glastonbury (US); CALOGERO, Joseph P, Chadds Ford (US)
(74) Representative: Dehns

(57) **Abstract**

A system (60) for establishing components of a gas turbine engine (20) may include a constraints engine (62). The constraints engine (62) may be operable to determine a set of constraints (81) based on one or more input parameters (80) and selected values (83) for a group of interrelated design parameters (70) that may be associated with respective elements of an array. The design parameters (70) may correspond to respective components of a gas turbine engine (20). The constraints engine (62) may be operable to communicate the constraints (81) to a design tool (64). The design tool (64) may be operable to select values for the elements of the array from respective ranges of selectable values (82) within a design space (68) of the respective components based on a design model (66) associated with the design parameters (70). A method for establishing components of a system (60) is also disclosed.

## Description

### TECHNICAL FIELD

This disclosure relates to systems and methods of designing components, including components of a gas turbine engine.

### BACKGROUND

Gas turbine engines can include a propulsor for propulsion. The propulsor also delivers air into a compressor section where it is compressed. The compressed air is then delivered into a combustion section, where it is mixed with fuel and ignited. The combustion gas expands downstream over and drives turbine blades within a turbine section, which drives the propulsor and compressor section. The various gas turbine engine components may be manufactured according to a respective design.

Design exploration may be performed using design of experiments (DOE), which is a known statistical technique that may be utilized to describe and determine the variation of information under hypothetical conditions. One or more input variables may be changed together to evaluate their effect on a given output variable. DOE tools may be utilized to evaluate a design space associated with one or more variables when selecting a design.

### SUMMARY

A system for establishing components of a gas turbine engine may include one or more processors coupled to memory. The one or more processors may be collectively operable to execute a constraints engine. The constraints engine may be operable to access one or more input parameters. The constraints engine may be operable to determine a set of constraints based on the one or more input parameters and selected values for a group of interrelated design parameters associated with respective elements of an array. The design parameters may correspond to respective components of a gas turbine engine. The constraints engine may be operable to communicate the constraints to a design tool. The design tool may be operable to select values for the elements of the array from respective ranges of selectable values within a design space of the respective components based on a design model associated with the design parameters. The ranges of selectable values may be limited by the respective constraints. The design tool may be operable to generate a configuration of the components based on the selected values. The constraints engine may be operable to receive one or more of the selected values from the design tool. The constraints for subsequent elements of the array may be based on the selected values of one or more prior elements of the array.

In any implementations, the one or more input parameters may include a global maximum limit and/or a global minimum limit that may bound the ranges of selectable values for the group of design parameters.

In any implementations, the constraints may include local maximum limits for the respective ranges of selectable values that may correspond to the selected values of the immediately preceding elements of the array. The constraints may include local minimum limits for the respective ranges of selectable values that may correspond to the selected values of the immediately preceding elements of the array. The local maximum limits may establish a decreasing trend of the selected values with respect to the elements of the array. The local minimum limits may establish an increasing trend of the selected values with respect to the elements of the array.

In any implementations, the constraints engine may be operable to determine respective slope values that may correspond to the selected values of adjacent elements of the array. The constraints may include local minimums and local maximums that may bound the respective ranges of selectable values based on the slope values.

In any implementations, the one or more input parameters may include a minimum slope angle limit and a maximum slope angle limit. The local maximum and minimum limits may be based on the slope values of the immediately preceding elements of the array and the minimum and maximum slope limits applied to the slope values.

In any implementations, the local maximum limits for the respective ranges of selectable values may be bounded by the selected values of the immediately preceding elements of the array. The local minimum limits for the respective ranges of selectable values may be bounded by the selected values of the immediately preceding elements of the array.

In any implementations, the one or more input parameters may include a global maximum limit and/or a global minimum limit that may bound the ranges of selectable values for the group of design parameters.

In any implementations, the components may be associated with respective stages of a compressor or a turbine of the gas turbine engine.

In any implementations, the design parameters may include at least one of the following: pressure ratios, a mean line through the compressor or the turbine, gaspath areas, airfoil counts, and aspect ratios.

A system for establishing components of a gas turbine engine may include one or more processors coupled to memory. The one or more processors may be collectively operable to execute a constraints engine. The constraints engine may be operable to receive, from a design tool, selected values for a subset of design parameters that may establish control points for a group of interrelated design parameters. The design parameters may correspond to respective components of a gas turbine engine. The design tool may be operable to select the values from respective ranges of selectable values within a design space of the respective components based on a design model associated with the group of design parameters. The constraints engine may be operable to determine values for a remainder of the design parameters based on the selected values for the control points, which may include fitting a curve to the selected values for the control points, and which may include determining the values along the curve associated with the remainder of the design parameters. The constraints engine may be operable to communicate the determined values to the design tool. The design tool may be operable to generate a configuration of the components based on the values of the design parameters.

In any implementations, the design parameters may be associated with respective elements of an array. A remainder of the elements of the array may be interspersed with the elements associated with the control points.

In any implementations, the curve may be a polynomial curve.

In any implementations, the constraints engine may be operable to access one or more input parameters. The constraints engine may be operable to determine a set of constraints based on the input parameters. The constraints engine may be operable to communicate the constraints to the design tool. The ranges of selectable values for the control points may be bounded by the constraints.

In any implementations, the group of design parameters may be associated with elements of an array. The ranges of selectable values may correspond to the respective elements. The constraints engine may be operable to receive one or more of the selected values for the respective control points from the design tool. The constraints engine may be operable to determine the respective constraints for subsequent elements of the array that may be associated with the respective control points based on the selected values of one or more prior elements of the array corresponding to the respective control points.

In any implementations, the constraints engine may be operable to determine respective slope values that may correspond to the selected values of adjacent elements of the array that may correspond to the respective control points. The one or more input parameters may include a minimum slope angle limit and a maximum slope angle limit. The constraints may include local minimum and maximum limits for the respective ranges of selectable values. The local maximum and minimum limits may be based on the slope values of the immediately preceding elements of the array that may correspond to the respective control points and the minimum and maximum slope limits.

In any implementations, the components may be associated with respective stages of a compressor or a turbine of the gas turbine engine. The control points may be associated with non-adjacent stages of the compressor or the turbine.

A method for establishing components of a system may include accessing one or more input parameters. The method may include determining a set of constraints for a group of interrelated design parameters that may be associated with respective elements of an array based on the one or more input parameters. The method may include selecting, using a design tool, values for one or more of the elements of the array from respective ranges of selectable values within a design space of respective components of a system based on a design model associated with the group of design parameters. At least some of the ranges of selectable values may be limited by the respective constraints. The constraints for one or more elements of the array may be based on the selected values of one or more adjacent elements of the array. The method may include generating, using the design tool, a configuration of the components based on the selected values.

In any implementations, the set of constraints may be based on the selected values for one or more prior elements of the array.

In any implementations, the one or more input parameters may include a minimum slope angle limit and a maximum slope angle limit. The determining step may include determining respective slope values that may correspond to the selected values of respective pairs of preceding elements of the array. The constraints may include local minimum and maximum limits for the respective ranges of selectable values that may be based on the slope values of the preceding elements of the array and the minimum and maximum slope limits.

In any implementations, the one or more of the elements may be associated with a subset of the design parameters that establish control points. The selected values for a remainder of the elements may be determined by fitting a curve to the selected values for the control points.

In any implementations, the method may include manufacturing the components according to the configuration.

In any implementations, the components may be associated with a gas turbine engine.

The present disclosure may include any one or more of the individual features disclosed above and/or below alone or in any combination thereof.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 discloses a gas turbine engine according to an implementation.
Figure 2 discloses a system including a constraints engine and a design exploration tool.
Figure 3 discloses an array of elements.
Figure 4 discloses a set of formulas associated with respective design parameters.
Figure 5 discloses a plot of parameter values and associated constraints in a user interface according to an implementation.
Figure 6 discloses a set of formulas associated with respective design parameters according to another implementation.
Figures 7A-7B disclose a plot associated with slope restrictions for respective design parameters in a user interface according to another implementation.
Figures 8A-8B disclose the plot of Figure 7A-7B associated with slope restrictions for additional design parameters.
Figure 9 discloses the plot of Figure 7A-7B and 8 associated with slope restrictions for additional design parameters.
Figure 10 discloses a listing of design parameters in a user interface according to another implementation.
Figure 11 disclose a plot associated with control points and an associated curve relating to a group of design parameters in a user interface.
Figure 12 disclose a plot associated with control points, slope restrictions and an associated curve in a user interface.
Figure 13 discloses a method of establishing components.

Like reference numbers and designations in the various drawings indicate like elements.

### DETAILED DESCRIPTION

The disclosed systems and methods relate to constraining design explorations (e.g., DOEs) for establishing various components, including gas turbine engine components. Although the disclosure primarily refers to gas turbine engine components, other systems may benefit from the teachings disclosed herein.

Design explorations (e.g., DOEs) may be created for groups of given (e.g., stage-wise) parameters. The design explorations may be utilized to evaluate and select engineering designs. A design space may be associated with one or more design parameters within a design model. Sets of values for the design parameters may define or may otherwise be associated with respective candidate designs within the design space. Some techniques to select designs within a design space for evaluation may include trial and error as users may manually update design models based on technical knowledge. If each parameter in a group is free to vary based on a minimum and maximum, trends in parameter values for the group may be evaluated and/or selected that may not be technically feasible. The disclosed systems and methods may be utilized to characterize a given grouping with one or more constraints. The disclosed techniques may be utilized to drive the exploration of a design space towards more feasible (e.g., realistic or desirable) parameter trends.

The disclosed systems and methods may be utilized to guide groupings of interrelated (e.g., stage-wise) parameters, which may establish relatively smooth, more feasible physical trends without constraining to (e.g., physics-based) equations. In implementations, there may be a design (e.g., input) parameter that may need an increasing trend from stage to stage in a compressor. Rather than letting the parameter at each stage vary independently, which could potentially result in a jagged trend where the values may jump around freely, the parameters for the respective stages may be guided towards feasible trends. Constraints may be established to guide ranges of selectable values for the respective design parameters. The constraints may be established based on engineering technical knowledge, which may be represented by one or more input parameters to the system. The disclosed techniques may be utilized to improve the results of an evaluation, which may be performed by a design (e.g., exploration or DOE) tool.

A subgroup of design parameters may be selected from a group of design parameters. The subgroup may establish respective control points (e.g., variables). The control points may be varied in a space-filling design exploration (e.g., DOE) tool. The design exploration tool may select values for the control points. In implementations, a (e.g., polynomial) curve may be fit to the values of the control points. Values for a remainder of the design parameter may be selected based on the values of the control points. The values for the remainder of the design parameters may be associated with respective positions along the polynomial curve. The disclosed techniques may be useful to adjust a relatively large number of design parameters at once by varying a smaller number of control points. The polynomial curve may be a Piecewise Cubic Hermite Interpolating Polynomial (PCHIP) spline. A remainder of the points for each design parameter in group may be interpolated based on the PCHIP curve. The remainder of the design parameters may be approximated over the respective subintervals along the polynomial curve, which may establish a relatively smooth trend between the design parameters. Different control point values and curve shapes may be explored, and the grouping curve may be smoother with a more feasible trend.

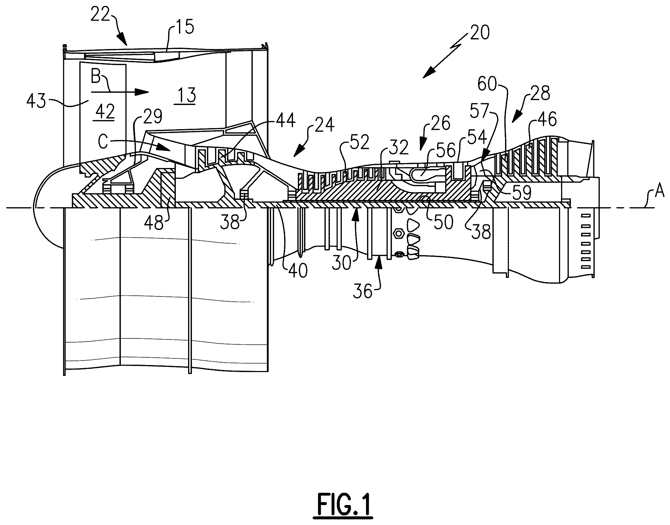

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F). The TET may be greater than or equal to 2700.0 °F, or more narrowly less than or equal to 3500.0 °F, such as between 2750.0 °F and 3350.0 °F. The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F, or more narrowly greater than or equal to 800.0 °F, such as between 900.0 °F and 975.0 °F. The relatively low EGT can be utilized in combination with the other techniques disclosed herein to reduce fuel consumption.

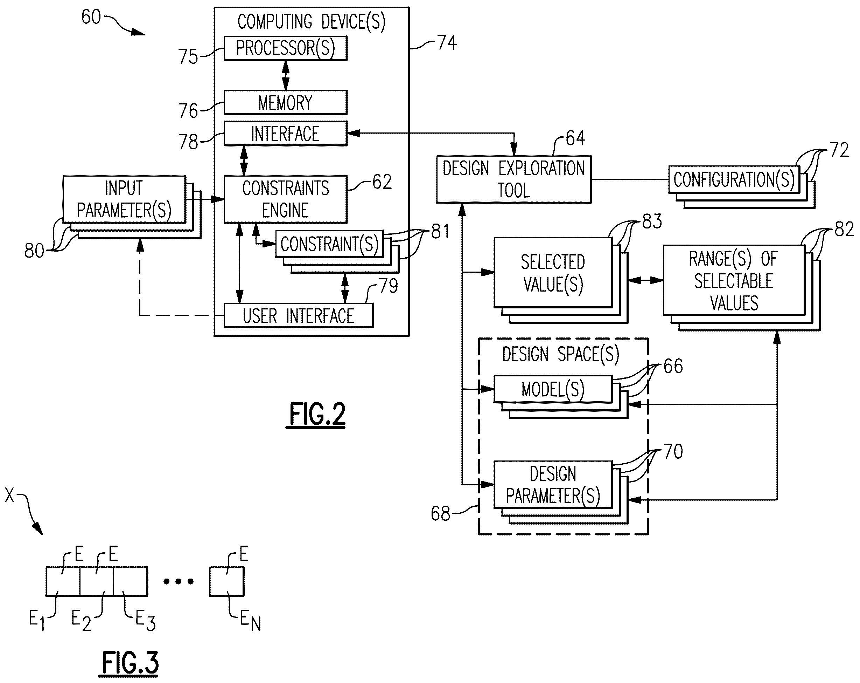

Figure 2 discloses a system 60 according to an implementation. The system 60 may be utilized to establish one or more components of a system, including one or more components of a gas turbine engine such as the engine 20. The gas turbine engine components may include components of a propulsor, compressor, combustor and/or turbine. The components may be associated with respective stages of a compressor and/or turbine, including airfoils and other parts having various geometries.

The system 60 may include a constraints engine (e.g., environment) 62. The constraints engine 62 may be operable to communicate (e.g., interface) with, or may be incorporated in, a design exploration tool 64. Various design exploration tools may be utilized, including design of experiments (DOE) tool and optimization tools. Various DOE tools (e.g., software applications and libraries) may be utilized, including commercial tools such as Moldflow Insight, ANSYS OptiSlang or Siemens HEEDS and/or open-source tools such as scikit-learn. Optimization tools may include machine learning. The design exploration tool 64 may be operable to access one or more design models 66. The design exploration tool 64 may be operable to evaluate design space(s) 68 of respective (e.g., gas turbine engine) components associated with one or more design parameters 70. The design space 68 may be established by the design model(s) 66 and/or associated design parameter(s) 70. The design parameters 70 may correspond to respective components of a gas turbine engine, such as the engine 20. The design parameters 70 may be associated with a respective model based definition (MBD) and may include geometry (e.g., dimensions or shape) and/or operating characteristics (e.g., boundary conditions). The design parameters 70 may be interrelated. In implementations, the components may be associated with respective stages of a compressor or a turbine of a gas turbine engine, such as the compressor(s) 44, 52 and/or turbine(s) 46, 54 of the engine 20. The design parameters 70 may include pressure ratios, a mean line through a compressor and/or turbine, gaspath areas and/or volumes, airfoil counts, and/or aspect ratios. The design exploration tool 64 may be operable to evaluate the boundary conditions associated with respective missions for a system. The design exploration tool 64 may be operable to generate one or more configurations (e.g., designs) 72 of the component(s) based on selected values for the design parameter(s) 70. The configuration(s) 72 may be utilized to manufacture the respective components.

The system 60 may include one or more computing devices 74. The computing device 74 may include one or more computer processors 75, memory 76, storage means, network devices, input and/or output devices, and/or interfaces. The processor(s) 75 may be coupled to the memory 76. The processor(s) 75 may be collectively operable to execute the constraints engine 62 and/or design exploration tool 64. The computing device 74 may be operable to execute one or more software programs, including one or more portions of the constraints engine 62 and/or design exploration tool 64. The computing device 74 may be operable to communicate with one or more networks established by one or more computing devices. The memory may include UVPROM, EEPROM, FLASH, RAM, ROM, DVD, CD, a hard drive, cloud storages, or other computer readable medium which may store data and/or the functionality of this description. The computing device 74 may be a desktop computer, laptop computer, smart phone, tablet, or any other computing device. Input devices may include a keyboard, mouse, touchscreen, etc. The output devices may include a monitor, speakers, printers, etc. The functionality of the constraints engine 62, design exploration tool 64 and/or methods disclosed herein may be stored in a non-transitory computer-readable medium, including any of the memory devices disclosed herein. The non-transitory computer-readable medium may have computer-executable instructions that, when executed by the one or more processors 75, may cause the processor(s) 75 to individually and/or collectively execute the constraints engine 62 and/or design exploration tool 64 to perform any of the functionality disclosed herein.

Each component may be associated with a respective configuration (e.g., design) 72, which may be specified by a respective MBD. The configuration 72 may be associated with any of the components disclosed herein, including a gas turbine engine component and/or assembly. The MBD may include a three-dimensional CAD model, model derivative(s) and/or associated product manufacturing information (PMI). The CAD model may be generated by a CAD system (e.g., CATIA, AutoCAD, Solidworks or Siemens NX). The PMI may include various information including tolerances and/or other dimensional requirements, material requirements, etc. The CAD model may include a virtual representation of the component(s). Physical component(s) may be manufactured based on the geometry and any associated attributes specified by the MBD.

The computing device(s) 74 may be operable to execute a (e.g., communications) interface 78. The interface 78 may be operable to interface or otherwise communicate with (e.g., access) one or more systems and/or information (e.g., data) sources, including the design exploration tool 64. The interface 78 may be established utilizing any of the techniques disclosed herein.

The computing device(s) 74 may be operable to execute a (e.g., graphical) user interface 79. The user interface 79 may be operable to display or otherwise communicate any of the data and/or other information disclosed herein. The constraints engine 62 may be operable to access one or more input parameters 80. In implementations, the interface 78 may be operable to access (e.g., obtain) the input parameter(s) 80. The input parameter(s) 80 may be stored in memory 76 and/or one or more configuration files. In implementations, a user may interact with the user interface 79 and/or another portion of the system 60 to specify (e.g., set or edit) any of the information disclosed herein, including the input parameter(s) 80.

The design parameter(s) 70 may be associated with respective range(s) of selectable values 82 within the design space 68. Values 83 may be selected within the respective ranges of selectable values 82. The design exploration tool 64 may be operable to select one or more of the values 83, which may be based on various parameters and/or relationships specified in the design model(s) 66. The model 66 may include one or more physics-based formulas and/or rulesets. One would understand how to establish the design models in accordance with the techniques disclosed herein.

The constraints engine 62 may be operable to determine one or more (e.g., design) constraints 81. The constraints engine 62 may be operable to cause the constraints 81 to limit (e.g., bound) the respective range(s) of selectable values 82 associated with the design parameter(s) 70 (e.g., range of 1-10 within a design space limited to 2-9). The constraints engine 62 may be operable to communicate the constraint(s) 81 and/or input parameter(s) 70 to the design exploration tool 64.

The constraints engine 62 may be operable to determine a set of constraints 81 based on the input parameter(s) 80 and selected value(s) 83 for a group of interrelated design parameters 70. In the implementation of Figure 3, the design parameters 70, range(s) of selectable values 82 and/or constraints 81 may be associated with respective elements E of an (e.g., one-dimensional) array X. The array X may include 1-N number of elements E (e.g., E₁, E₂...E_{N}). The elements E may be (e.g., logically) linked in sequence. The design exploration tool 64 may be operable to select value(s) for the element(s) E of the array X from the respective range(s) of selectable values 82 within the design space 68. The constraints engine 62 may be operable to receive one or more selected values 83 from the design exploration tool 64 and/or vice versa.

The range(s) of selectable values 82 for the design parameter(s) 70 with a design space 68 may be limited by the respective constraint(s) 81. The design exploration tool 64 may be operable to generate configuration(s) 72 of the component(s) based on the selected value(s) 83 for the respective range(s) 82.

The constraints engine 62 may utilize various techniques to establish the constraints 81. In implementations, the constraints engine 62 may utilize a relative offset technique to establish the constraints 81. The offset(s) may be absolute values (e.g., parameter 2 = parameter 1 ± 10) and/or may be a percentage (e.g., parameter 2 = parameter 1 ± 10%). Relative offsets may be established to bound the range(s) of selectable values 82 associated with the respective (e.g., stage-wise) parameters 70 relative to each other. The parameter(s) 70 may be bounded in a manner that may facilitate a space-filling design exploration (e.g., DOE) of feasible values to evaluate across the bounded range(s) 82.

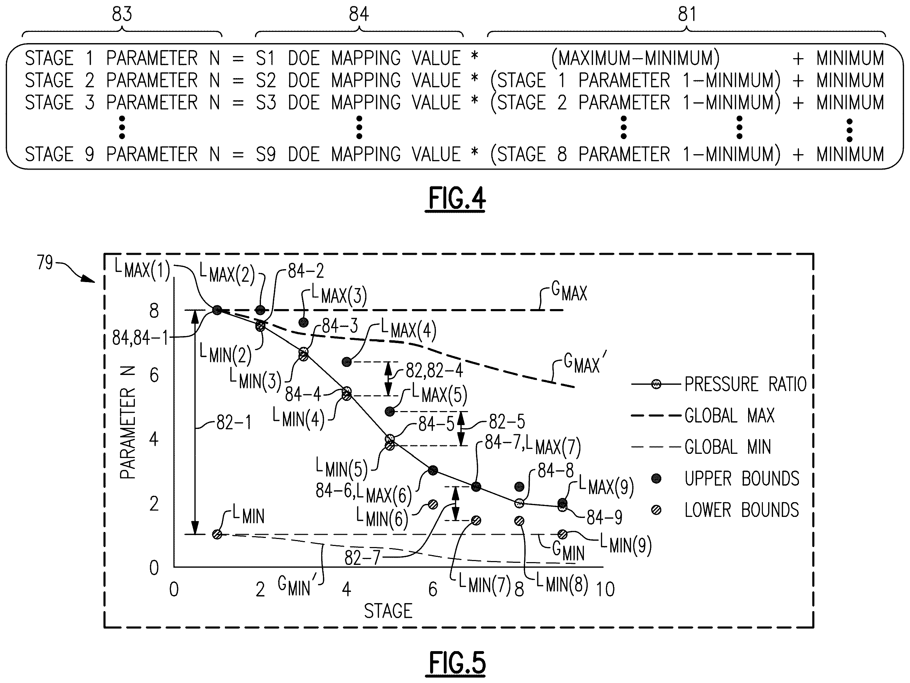

Referring to Figures 4-5, with continuing reference to Figures 2-3, an implementation for establishing the constraints 81 utilizing relative offsets is disclosed. Constraints 81 for subsequent elements E of an array X (Figure 3) may be based on the selected value(s) 83 of one or more prior elements E of the array X.

The (e.g., stagewise) parameters 70 may be associated with respective normalized (e.g., mapping) values 84. Normalized values 84 may be selected between 0 and 1 (inclusive) in the design exploration for each parameter 70. The normalized values 84 may be mapped based on logic to calculate the selected (e.g., actual) values 83 relative to adjacent (e.g., previous) parameter(s) 70 within the group. In other implementations, the constraints 81 may be established for range(s) of actual values that may be selectable for the respective parameters 70, and the normalization may be omitted.

Figure 4 discloses a set of equations that may be associated with a group of interrelated design parameters 70. The parameters 70 may be associated with respective elements E of the array X. In the implementation of Figure 4, the parameters 70 may be pressure ratios associated with respective stages of a compressor. The parameters 70 may be calculated values for each stage of a given design exploration design. The design exploration mapping values 84 may be independent values, which may be selected by the design exploration tool 64 for (e.g., linearly) interpolating with bounds established by the respective constraints 81. The input parameters 80 may include a global maximum limit G_{MAX} and/or a global minimum limit G_{MIN} that may bound the range(s) of selectable values 82 for all parameters 70 within the group of design parameters 70. The global maximum limit G_{MAX} and/or global minimum limit G_{MIN} may be constant (e.g., linear) values. In implementations, a global maximum limit G_{MAX}' and/or global minimum limit G_{MIN}' may be non-linear and may be established as a (e.g., function-based) curve (e.g., Figure 5) and/or step function. The global maximum limit G_{MAX}' and/or global minimum limit G_{MIN}' may vary with respect to the elements E of the array.

The constraints 81 for each parameter 70 may include a maximum and/or minimum value. The maximum and minimum values may include the global maximum limit G_{MAX} and global minimum limit G_{MIN}.

The constraints 81 may include local maximum limits (e.g., upper bounds) L_{MAX} for the respective ranges of selectable values 82 corresponding to the selected values 83 of immediately preceding element(s) E of the array X. The local maximum limits L_{MAX} may be the same or may differ. The constraints 81 may include local minimum limits (e.g., lower bounds) L_{MIN} for the respective ranges of selectable values 82 corresponding to the selected values 83 of immediately preceding element(s) E of the array X. The local minimum limits L_{MIN} may be the same or may differ. The local maximum limits L_{MAX} may establish a decreasing trend of the selected values 83 with respect to the elements E of the array X. The local minimum limits L_{MIN} may establish an increasing trend of the selected values 83 with respect to the elements E of the array X.

To establish a decreasing trend (e.g., Figure 5), the mapped value(s) 84 associated with the selected value(s) 83 of previous parameter(s) 70 in the array X may be set as the local maximum limit (e.g., upper bound) L_{MAX} for the range of selectable values 82 for the next respective parameter(s) 70 in the array X. In implementations, the local maximum limit L_{MAX} may be no more than the global maximum limit G_{MAX}. The local minimum limit(s) L_{MIN} may be greater than the global minimum limit G_{MIN}. In implementations, the local minimum limit(s) L_{MIN} may be set to the global minimum limit G_{MIN} and/or may be omitted, including being omitted from being displayed in the user interface 79. To establish an increasing trend, the mapped value 84 associated with the selected value 83 of the previous parameter(s) 70 may be set as the local minimum limit (e.g., lower bound) L_{MIN} for the range of selectable values 82 for the next respective parameter(s) 70. In implementations, the local minimum limit L_{MIN} may be no less than the global minimum limit G_{MIN}. The local maximum limit(s) L_{MAX} may be less than the global maximum limit G_{MAX}. In implementations, the local maximum limit(s) L_{MAX} may be set to the global maximum limit G_{MAX} and/or may be omitted, including being omitted from being displayed in the user interface 79.

The constraints 81 and/or selected values 83/84 may be associated with respective objects in the user interface 79, which may overlay a respective plot (e.g., Figure 5). A user may interact with the respective objects in the user interface 79 and/or with another portion of the system 20 to set (e.g., adjust) the constraints 81 (e.g., limits), the associated range(s) of selectable values 82 (e.g., 82-4, 82-5) and/or selected values 84 (e.g., 84-1 to 84-9). The user may interact with the user interface 79 using an input device (e.g., cursor) to select the respective object(s) to adjust the value(s) and/or constraints. Adjusting the value(s) 83/84 may cause related constraints 81 to be adjusted by the constraints engine 62 and/or value(s) 83/84 for other parameter(s) 70 to be adjusted (e.g., recalculated) by the design exploration tool 64. In implementations, the user may interact with the user interface 79 to cause any of the objects and/or group(s) of object(s) to be selectively displayed (e.g., toggled on/off) in the user interface 78, such as the object(s) associated with the global and/or local minimum and/or maximum limits and/or a curve connecting the value(s) 84.

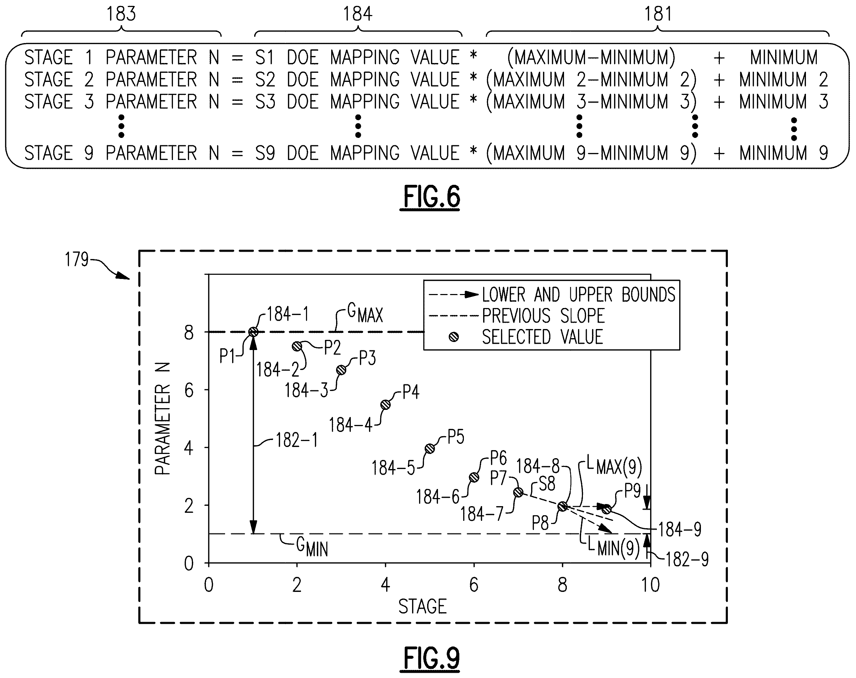

Referring to Figures 6-9, with continuing reference to Figures 2-3, another technique for establishing the constraints 181 utilizing relative offsets is disclosed. In this disclosure, like reference numerals designate like elements where appropriate and reference numerals with the addition of one-hundred or multiples thereof designate modified elements that are understood to incorporate the same features and benefits of the corresponding original elements.

Figure 6 discloses a set of equations that may be associated with a group of (e.g., interrelated) design parameters 170 (e.g., Figure 2). In the implementation of Figure 6, the parameters 170 may be pressure ratios associated with respective stages of a compressor. The parameters 170 may be associated with respective elements E of an array X. Constraints 181 for subsequent elements E of an array X (Figure 3) may be based on selected value(s) 184 of one or more adjacent (e.g., prior) elements E of the array X. The constraints 181 may include local minimums L_{MIN} and local maximums L_{MAX} that may bound the respective ranges of selectable values 182. The local maximum limits L_{MAX} for the respective ranges of selectable values 182 may be bounded by the selected values 184 of the (e.g., immediately) preceding element(s) E of the array X. The local minimum limits L_{MIN} for the respective ranges of selectable values 182 may be bounded by the selected values 184 of the (e.g., immediately) preceding element(s) E of the array X. The input parameter(s) 180 (Figure 2) may include a global maximum limit G_{MAX} and/or a global minimum limit G_{MIN} that may bound the range(s) of selectable values 182 for the group of design parameters 170.

A trend of selected values 183 may be smoothed by restricting an amount of variation in slope from parameter to parameter 170 (e.g., point to point) within a group of design parameters 170. Minimum and maximum limits (e.g., bounds) L_{MIN}, L_{MAX} may be calculated based on the slope restriction(s).

The constraints engine 62 may be operable to determine respective slope values S corresponding to the selected values 184 of adjacent (e.g., prior) elements E of the array E. Slope values S may be calculated for one or more adjacent (e.g., prior) pairs of the selected values 184. The local minimums L_{MIN} and local maximums L_{MAX} may bound the respective ranges of selectable values 182 based on the slope values S.

The input parameter(s) 80 (Figure 2) may include a minimum change in slope angle limit α_{MIN} and/or a maximum change in slope angle limit α_{MAX}. The magnitudes of the slope angle limits α_{MIN}, α_{MAX} may be the same or may differ from each other. A user may interact with the user interface 79 and/or otherwise specify the input parameters 80, including the minimum and/or maximum slope angles α_{MIN}, α_{MAX}. The local maximum and/or minimum limit(s) L_{MAX}, L_{MIN} may be based on the slope values S of the immediately preceding elements E of the array X and/or the minimum and maximum slope limits α_{MIN}, α_{MAX} applied to the respective slope values S. Values for the slope angles α_{MIN}, α_{MAX} may be selected to smooth the trend of selected values 183/184 and may define whether the trend should be increasing or decreasing to guide selections towards more feasible physical trends within the design space 168 (Figure 2).

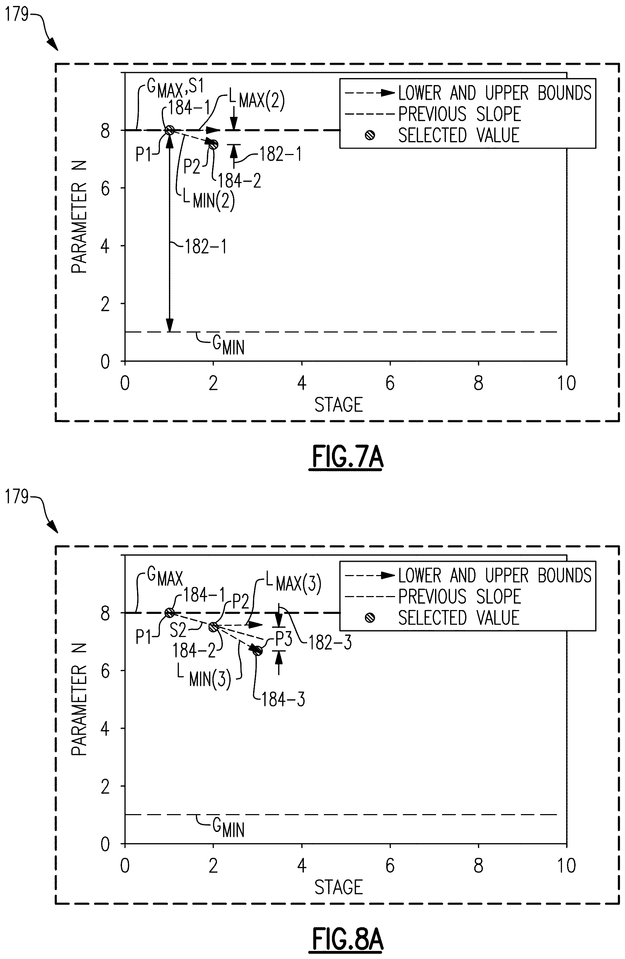

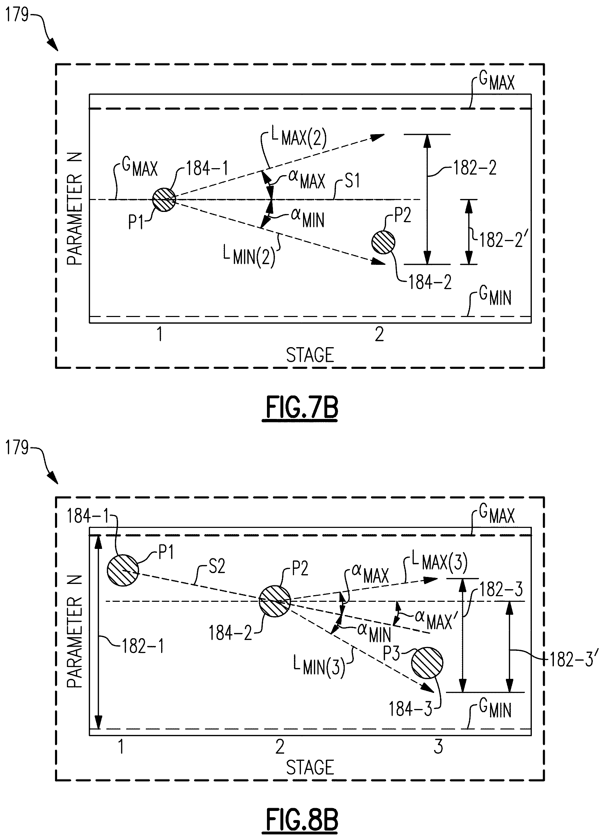

In the implementation of Figures 7A-7B, a first point P1 may lack local minimum and maximum limits (e.g., boundary restrictions). The range of selectable values 182-1 associated with the first point P1 may extend between the global minimum and/or global maximum limits G_{MIN}, G_{MAX}. The design exploration tool 64 may select a value 184-1 with the respective range 182-1. The first parameter 170-1 of the group of design parameters 170 may vary freely within the design exploration (e.g., DOE) based on the global maximum limit G_{MAX} and/or global minimum limit G_{MIN}, which may establish a respective range of selectable values 182-1. The local minimum and maximum limits L_{MIN}, L_{MAX} of the second parameter 170-2 of the group of parameters 170 associated with a second point P2 may be defined relative to the selected value 184-1 of the first parameter 170-1 for a given design exploration (e.g., DOE) instance. The local minimum and maximum limits L_{MIN}, L_{MAX} of the second parameter 170-2 may be restricted by the slope angle (e.g., variation) limits α_{MIN}, α_{MAX}, which may be specified by the user, and the slope S1 associated with the parameter 170-1. The slope S1 may be horizontal. In the implementation of Figures 8A-8B, constraints 181 for the second point P2 may be determined based on the maximum and minimum slope angles α_{MIN}, α_{MAX} from the slope S1 associated with the first point P1. Constraints 181 for a third point P3 may be determined in a similar manner based on the maximum and minimum slope angles α_{MIN}, α_{MAX} from a slope S2 associated with the first and second points P1, P2. The local minimum and maximum limits L_{MIN}, L_{MAX} of the third parameter 170-3 associated with the third point P3 may be restricted by the slope angle (e.g., variation) limits α_{MIN}, α_{MAX} and the slope S2 associated with the previous parameter 170-2. The slope S2 may be established based on the values 184-1, 184-2. These calculations may continue for the rest of the parameters 170 defined for a given group (e.g., Figure 9). Once the local maximum and minimum limits L_{MAX}, L_{MIN} are calculated based on the previous slope S, the constraints engine 64 may use the selected values 183 to calculate the (e.g., actual) values 184 for the respective parameters 170. The constraints 181 may cause a smoothing of the selected values 184 for the points P2, P3 by excluding selections that may be too high or too low. To force a trend, such as a decreasing trend for point P3, the maximum slope angle α_{MAX} and associated range of selectable values 182-2' (e.g., Figure 7B) may be bounded by the selected value 184-2 associated with the second point P2. The user may interact with any of the objects associated with the points P1 to P9 in a user interface 179 to adjust the respective values 184-1 to 184-9 (e.g., moving the point up and/or down to manually change the value).

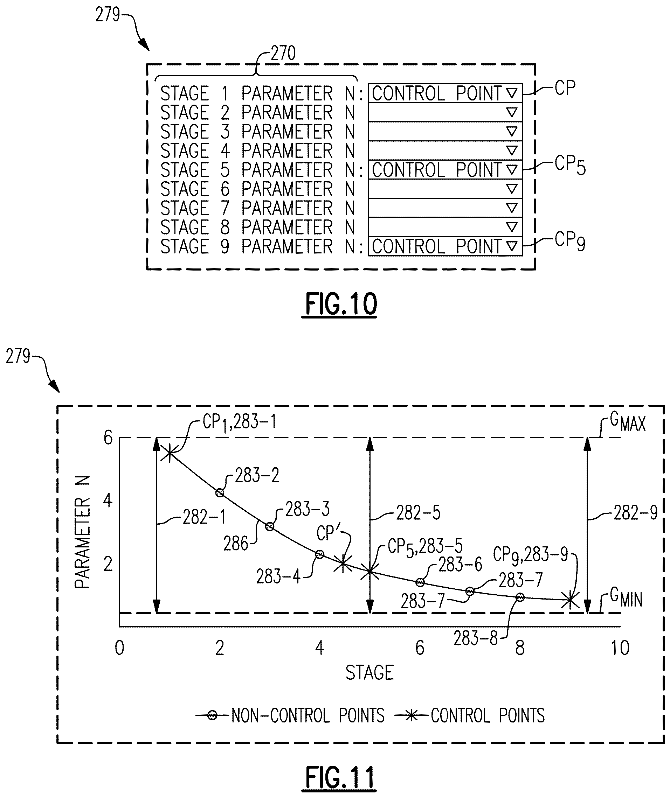

Referring to Figures 10-11, with continuing reference to Figures 2-3, another implementation for establishing the constraints is disclosed. The constraints engine 62 may be operable to receive, from the design exploration tool 64, a selection of one or more control points CP. The user may interact with the user interface 279 and/or the constraints engine 62 to define which design parameters 270 to set as control points CP and/or the number of control points CP. In implementations, the control points CP and/or associated information may be specified as input parameters 280. A subset of design parameters 270 may establish the control points CP for a group of (e.g., interrelated) design parameters 270. In the implementation of Figures 10-11, the control points CP may include control points CP₁, CP₅ and/or CP₉. Fewer or more than three control points may be established in accordance with the techniques disclosed herein. The control points CP may include at least two or three design parameters 270 within the group of design parameters 270. A remainder of the design parameters 270 within the group may include two or more design parameters 270 associated with respective subintervals between the adjacent control points CP. One or more control points may differ from the design parameters 270, such as control point CP' (Figure 11). The control point CP' may be an intermediate point between adjacent parameters 270. The control point CP' may be associated with a component between the components associated with the adjacent parameters (e.g., stages) 270. The design parameters 270 may be associated with respective elements E of an array X (Figure 3). A remainder of the elements E of the array X associated with the respective parameters 270 (e.g., stages 2-4 and 6-8) may be interspersed with the elements E associated with the control points CP (e.g., stages 1, 5 and 9).

The constraints engine 62 may be operable to receive, from the design exploration tool 64, selected values 283 for the subset of design parameters 270 associated with the respective control points CP (e.g., 283-1, 283-5, 283-9). The design exploration tool 64 may be operable to select the values 283 from respective ranges of selectable values 282 within a design space 268 of respective components of a system based on a design model 266 associated with the group of design parameters 270. The values 283 may be selected utilizing any of the techniques disclosed herein. In implementations, the values 283 may be selected from respective ranges of selectable values 282 (e.g., 282-1, 282-5, 282-9).

The constraints engine 62 may be operable to determine (e.g., select) values 283 for a remainder of the (e.g., non-control point) design parameters 270 (e.g., 283-2 to 283-4 and 283-6 to 283-8) based on the selected values 283 for the control points CP, including fitting a grouping (e.g., polynomial) curve 286 to the selected values 283 for the control points CP. The constraints engine 62 may be operable to determine the values 283 along respective subintervals of the polynomial curve 286 associated with the remainder of the design parameters 270 within the group of design parameters 270. Various polynomial curves may be utilized, such as a piecewise cubic Hermite interpolating polynomial (PCHIP) spline (e.g., curve). The constraints engine 62 may be operable to fit the curve 286 over the control points CP. The constraints engine 62 may be operable to interpolate the remainder of the non-control point parameters 270 based on a polynomial curve 286 defined by the control points CP. The constraints engine 62 may be operable to communicate the determined values 283 for the remainder of the design parameters 270 to the design exploration tool 64. The design exploration tool 64 may be operable to generate a configuration 72 (Figure 2) of the component(s) of the system based on the selected values 283 of the design parameters 270. The curve 286 may be utilized to establish a relatively smoother trend in the values 283 than allowing each parameter 270 to be varied freely, which may result in a relatively jagged trend. The curve 286 fit to the control points CP and/or the associated values 283 may be displayed in the user interface 279.

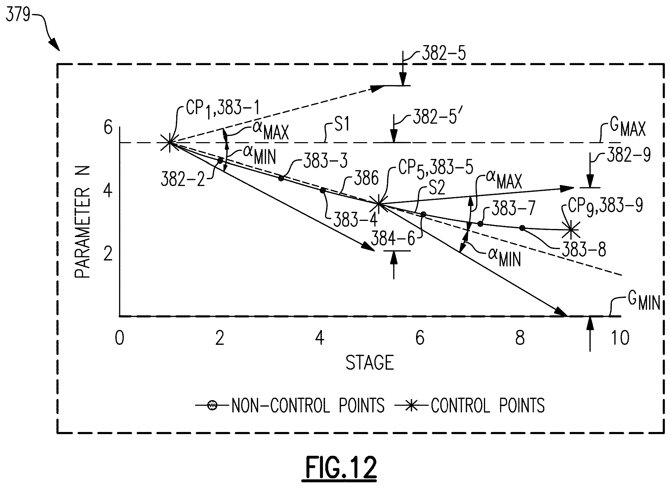

In the implementation of Figure 12, with continuing reference to Figures 2-3, the constraints engine 62 may be operable to determine a set of constraints 381 based on one or more input parameters 380. The constraints 381 may be established utilizing any of the techniques disclosed herein. The constraints engine 62 may be operable to communicate the constraints 381 to the design exploration tool 64. The ranges of selectable values 382 for the control points CP may be bounded by the constraints 381. The group of design parameters 370 may be associated with respective elements E of an array X (Figure 3). The ranges of selectable values 382 may correspond to the respective elements E.

The constraints engine 62 may be operable to receive one or more of the selected values 383 for the respective control points CP from the design exploration tool 64. The constraints engine 62 may be operable to determine the respective constraints 381 for subsequent elements E of the array X associated with the respective control points CP based on the selected values 383 of one or more adjacent (e.g., prior) elements E of the array X corresponding to the respective control points CP.

The constraints engine 62 may be operable to determine respective slope values S corresponding to the selected values 383 of adjacent (e.g., prior) elements E of the array X corresponding to the respective control points CP (e.g., S1, S2). The constraints 381 may include local minimum and maximum limits for the respective ranges of selectable values 382. The local maximum and minimum limits may be based on the slope values S of the (e.g., immediately) preceding element(s) E of the array X corresponding to the respective control points CP and the minimum and/or maximum slope limits α_{MAX}, α_{MIN} (see also Figure 7-9). In implementations, the minimum and/or maximum slope limits α_{MAX}, α_{MIN} applied to the slope(s) S may be bounded by respective global minimum and/or maximum limits G_{MIN}, G_{MAX} (e.g., range 382-5').

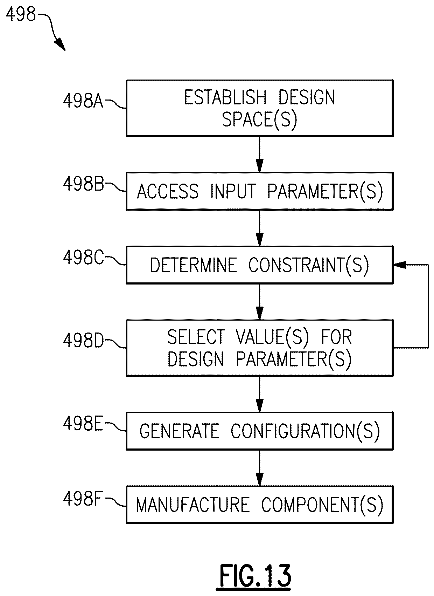

Figure 13 discloses a method in a flowchart 498 for establishing components of a system according to an implementation. The method 498 may be utilized to establish one or more configurations (e.g., designs) associated with various components of a system, including any of the gas turbine engine components and associated features disclosed herein. The method 498 may be utilized to establish physical (e.g., as-manufactured) instances of the components. Fewer or additional steps than are recited below could be performed within the scope of this disclosure, and the recited order of steps is not intended to limit this disclosure. The system 60 may be programmed with logic for performing the method 498. Reference is made to the system 60.

Referring to Figures 2-3, with continuing reference to Figure 13, a design space 68 may be established at block 498A. The design space 68 may be associated with one or more (e.g., interrelated) design parameters 70 and/or design models 66.

At block 498B, one or more input parameters 80 may be specified and/or accessed. The input parameters 80 may include any of the input parameters disclosed herein. In implementations, the input parameters 70 may include a minimum slope angle limit L_{MIN} and/or a maximum slope angle limit L_{MAX}, which may be associated with respective minimum and maximum slope angles α_{MIN}, α_{MAX} (e.g., Figures 6-9).

At block 498C, one or more constraints 81 may be determined. Block 498C may include determining a set of constraints 81 for the group of interrelated design parameters 70 associated with respective elements E of an array X (Figure 3) based on the input parameter(s) 80.

In the implementation of Figures 6-9, block 498C may include determining respective slope values S corresponding to the selected values 183 of respective pairs of (e.g., preceding) element(s) E of the array X. The constraints 181 may include local minimum and/or maximum limits L_{MIN}, L_{MAX} for the respective range(s) of selectable values 182 based on the slope values S of the preceding element(s) E of the array X and/or the minimum and maximum slope limits L_{MIN} and/or L_{MAX}.

At block 498D, values 83 for one or more of the elements E of the array X may be selected. The value(s) 83 may be selected using the design exploration tool 64. The values 83 for one or more of the elements E may be selected from respective range(s) of selectable values 82 within the design space 68 of respective components of the system based on the design model(s) 66 associated with the group of design parameters 70.

At least some of the ranges of selectable values 82 may be limited by the respective constraints 81. Constraint(s) 81 for one or more elements E of the array X may be based on the selected values 83 of one or more adjacent elements E of the array X. The constraint(s) 81 may be based on the selected value(s) 83 for one or more (e.g., immediately) prior elements E of the array X.

In the implementation of Figures 10-11, the one or more of the elements E of the array X may be associated with a subset of the design parameters 270 that may establish control point(s) CP. The selected values 283 for a remainder of the elements E associated with the non-control point parameters 270 may be determined by fitting a polynomial curve 286 to the selected values 283 for the control points CP.

At block 498E, configuration(s) 72 of the component(s) may be generated based on the selected values 83. The configuration(s) 72 may be generated by the design exploration tool 64. In implementations, the configuration(s) 72 may include a MBD and associated PMI.

At block 498F, one or more components may be manufactured. Block 498F may include manufacturing the components according to the configuration(s) 72. The components may include any of the components disclosed herein, such as components associated with a gas turbine engine.

The disclosed systems and methods may be utilized to (e.g., selectively) exclude exploring designs within a design space that may be associated with relatively undesirable parameter trends, which may free up a design exploration (e.g., DOE) to drive towards more feasible designs. The disclosed techniques may explore more of the design space quicker for feasible designs as compared to a user manually adjusting a design model. Constraints may be established based on one or more input parameters, which may be specified based on engineering knowledge of trends to guide selection(s) within the design space. Exploration of relatively more feasible designs may lead to improved engine performance, lower weight and/or lower cost, and may reduce manual processing steps in directing the design exploration.

Establishing a set of control points for a group of (e.g., interrelated) design parameters may allow more of the design space to be explored for feasible physical trends. Trends may be excluded that may not be acceptable. The design exploration may be focused towards more feasible designs. Value selections may be guided by user experience, which may be input into the system to establish constraints.

The disclosed techniques may result in improved engine performance, lower weight and/or lower cost, and a reduction in engineering and/or computational resources.

It should be understood that relative positional terms such as "forward," "aft," "upper," "lower," "above," "below," and the like are with reference to the normal operational attitude of the vehicle and should not be considered otherwise limiting.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A system for establishing components of a gas turbine engine comprising:
one or more processors coupled to memory, the one or more processors collectively operable to execute a constraints engine, and the constraints engine is operable to:
access one or more input parameters;
determine a set of constraints based on the one or more input parameters and selected values for a group of interrelated design parameters associated with respective elements of an array, and the design parameters corresponding to respective components of a gas turbine engine;
communicate the constraints to a design tool, the design tool operable to select values for the elements of the array from respective ranges of selectable values within a design space of the respective components based on a design model associated with the design parameters, the ranges of selectable values limited by the respective constraints, and the design tool operable to generate a configuration of the components based on the selected values; and
receive one or more of the selected values from the design tool, wherein the constraints for subsequent elements of the array are based on the selected values of one or more prior elements of the array.

2. The system as recited in claim 1, wherein:
the constraints comprise:
local maximum limits for the respective ranges of selectable values corresponding to the selected values of the immediately preceding elements of the array; and/or
local minimum limits for the respective ranges of selectable values corresponding to the selected values of the immediately preceding elements of the array;
the local maximum limits establish a decreasing trend of the selected values with respect to the elements of the array; and
the local minimum limits establish an increasing trend of the selected values with respect to the elements of the array;
optionally wherein the one or more input parameters include a global maximum limit and/or a global minimum limit that bound the ranges of selectable values for the group of design parameters.

3. The system as recited in claim 1, wherein the constraints engine is operable to:
determine respective slope values corresponding to the selected values of adjacent elements of the array;
wherein the constraints include local minimums and local maximums that bound the respective ranges of selectable values based on the slope values.

4. The system as recited in claim 3, wherein:
the one or more input parameters include a minimum slope angle limit and a maximum slope angle limit; and
the local maximum and minimum limits are based on the slope values of the immediately preceding elements of the array and the minimum and maximum slope limits applied to the slope values.

5. The system as recited in claim 4, wherein:
the local maximum limits for the respective ranges of selectable values are bounded by the selected values of the immediately preceding elements of the array and/or the local minimum limits for the respective ranges of selectable values are bounded by the selected values of the immediately preceding elements of the array; or
wherein the one or more input parameters include a global maximum limit and/or a global minimum limit that bound the ranges of selectable values for the group of design parameters.

6. The system as recited in any preceding claim, wherein:
the components are associated with respective stages of a compressor or a turbine of the gas turbine engine, optionally wherein the design parameters include at least one of the following: pressure ratios, a mean line through the compressor or the turbine, gaspath areas, airfoil counts, and aspect ratios.

7. A system for establishing components of a gas turbine engine comprising:
one or more processors coupled to memory, the one or more processors collectively operable to execute a constraints engine, and the constraints engine is operable to:
receive, from a design tool, selected values for a subset of design parameters that establish control points for a group of interrelated design parameters, the design parameters corresponding to respective components of a gas turbine engine, and the design tool operable to select the values from respective ranges of selectable values within a design space of the respective components based on a design model associated with the group of design parameters;
determine values for a remainder of the design parameters based on the selected
values for the control points, including fitting a curve to the selected values for the control points, and determining the values along the curve associated with the remainder of the design parameters; and communicate the determined values to the design tool, wherein the design tool is
operable to generate a configuration of the components based on the values of the design parameters.

8. The system as recited in claim 7, wherein:
the design parameters are associated with respective elements of an array, and a remainder of the elements of the array are interspersed with the elements associated with the control points, and/or wherein the components are associated with respective stages of a compressor or a turbine of the gas turbine engine and the control points are associated with non-adjacent stages of the compressor or the turbine, and/or wherein the curve is a polynomial curve.

9. The system as recited in claim 7 or 8, wherein the constraints engine is operable to:
access one or more input parameters;
determine a set of constraints based on the input parameters; and
communicate the constraints to the design tool, wherein the ranges of selectable values for the control points are bounded by the constraints.

10. The system as recited in claim 9, wherein:
the group of design parameters are associated with elements of an array, the ranges of selectable values corresponding to the respective elements; and
the constraints engine is operable to:
receive one or more of the selected values for the respective control points from the design tool; and
determine the respective constraints for subsequent elements of the array associated with the respective control points based on the selected values of one or more prior elements of the array corresponding to the respective control points.

11. The system as recited in claim 9, wherein the constraints engine is operable to:
determine respective slope values corresponding to the selected values of adjacent elements of the array corresponding to the respective control points;
wherein the one or more input parameters include a minimum slope angle limit and a maximum slope angle limit; and
wherein the constraints include local minimum and maximum limits for the respective ranges of selectable values, and the local maximum and minimum limits are based on the slope values of the immediately preceding elements of the array corresponding to the respective control points and the minimum and maximum slope limits.

12. A method for establishing components of a system comprising:
accessing one or more input parameters;
determining a set of constraints for a group of interrelated design parameters associated with respective elements of an array based on the one or more input parameters;
selecting, using a design tool, values for one or more of the elements of the array
from respective ranges of selectable values within a design space of respective components of a system based on a design model associated with the group of design parameters, wherein at least some of the ranges of selectable values are limited by the respective constraints, and the constraints for one or more elements of the array are based on the selected values of one or more adjacent elements of the array; and generating, using the design tool, a configuration of the components based on the
selected values.

13. The method as recited in claim 12, wherein:
the set of constraints are based on the selected values for one or more prior elements of the array; and/or
further comprising manufacturing the components according to the configuration, and/or wherein the components are associated with a gas turbine engine.

14. The method as recited in claim 12 or 13, wherein:
the one or more input parameters include a minimum slope angle limit and a maximum slope angle limit; and
the determining step comprises:
determining respective slope values corresponding to the selected values of respective pairs of preceding elements of the array;
wherein the constraints include local minimum and maximum limits for the respective ranges of selectable values based on the slope values of the preceding elements of the array and the minimum and maximum slope limits.

15. The method as recited in any of claims 12-14, wherein:
the one or more of the elements are associated with a subset of the design parameters that establish control points; and
the selected values for a remainder of the elements are determined by fitting a curve to the selected values for the control points.
